# EUROPÄISCHE PATENTSCHRIFT

(11) **EP 1 475 001 B1**
(45) Veröffentlichungstag und Bekanntmachung des Hinweises auf die Patenterteilung: **23.04.2008**
(21) Anmeldenummer: 04013214.4
(22) Anmeldetag: 04.02.2002
(51) Int. Cl.: B01F 15/06, A23L 3/36

(54) **Verfahren zur Herstellung einer Vielzahl von Portionen einer vorgekochten Speise**
Method for preparing multiple portions of a precooked dish
Procédé de préparation de portions multiples de plats précuits

(30) Priorität: 08.02.2001 DE 10106087
(43) Veröffentlichungstag der Anmeldung: 10.11.2004
(62) Teilanmeldung aus: 02704626.7
(73) Patentinhaber: Metos Oy Ab, 04220 Kerava (FI)
(72) Erfinder: Goseling, Hubert, 97959 Assamstadt (DE); Kienzle, Paul, 97990 Weikersheim (DE)
(74) Vertreter: von den Steinen, Axel

(56) Entgegenhaltungen:
- EP-A- 0 907 060
- DE-A- 3 727 594
- US-A- 4 640 099
- US-A- 5 218 898
- US-A- 5 381 670

## Beschreibung

Die Erfindung betrifft ein Verfahren zur Herstellung von vorgekochten Speisen nach dem Oberbegriff des Anspruchs 1.

In vielen Gemeinschaftsverpflegungseinrichtungen, beispielsweise Kantinen von Großbetrieben oder in Krankenhäusern, ist es erforderlich, dass an sieben Tagen der Woche Speisen ausgegeben werden. Werden diese Speisen an sieben Tagen der Woche jeweils frisch zubereitet, entstehen dadurch hohe Kosten, da der Einsatz des Küchenpersonals über das Wochenende nur bei Zahlung von entsprechenden Aufschlägen möglich ist. Es wird deshalb vielfach ein Verfahren eingesetzt, das in Fachkreisen als "Cook and Chill" bezeichnet wird. Bei diesem Verfahren werden die Speisen nur wochentags zubereitet, wobei die für das Wochenende erforderlichen Portionen in dieser Zeit vorgekocht werden. Nach der Zubereitung der vorgekochten Speisemenge wird diese auf eine Temperatur unterhalb von 8°C heruntergekühlt und bei einer geeigneten Kühltemperatur gelagert. Dabei sollte eine Temperatur von 3°C zumindest einmal kurz unterschritten werden. Die Speisemasse kann dann zum Verzehr an den Wochenenden im Ganzen oder portionsweise aufgewärmt werden.

Problematisch an dem "Cook and Chill"-Verfahren ist es, dass es aufgrund der Lagerung der Speisen bis zu deren Aufwärmung zu hygienischen Belastungen kommen kann. Dabei ist weniger die Lagerung bei einer Temperatur unterhalb von 8°C kritisch, da sich bei diesen Temperaturen Mikroorganismen wie Bakterien und Pilze kaum vermehren. Als kritische Größe ist vielmehr die Abkühlphase anzusehen, während der die Speisen einen Temperaturbereich von 55°C bis zur Endtemperatur unter 8°C durchlaufen. In diesem Temperaturband finden Mikroorganismen in der vorgekochten Speise optimale Vermehrungsbedingungen und können sich somit während der Abkühlphase besonders stark vermehren.

Um die Vermehrung der Mikroorganismen während der Abkühlphase unterhalb eines tolerierbaren Maßes zu halten, ist es erforderlich, dass die vorgekochten Speisen innerhalb möglichst kurzer Zeit auf die Endtemperatur heruntergekühlt werden. Um die Vermehrung der Mikroorganismen während der Abkühlphase zuverlässig reduzieren zu können, ist es zwingend, dass nicht nur Teilbereiche der Speise die Endtemperatur innerhalb ausreichend kurzer Zeit erreicht haben, sondern dass die Speisemasse ausgehend vom Rand bis hin zum Kern durchgehend auf die Endtemperatur abgekühlt ist.

Wird die Speise, beispielsweise durch Einbringung eines die Speisemasse enthaltenden Behälters in einen Kühlschrank, lediglich vom Rand ausgehend gekühlt, so hängt die Dauer, bis der Kern der Speisenmasse die Endtemperatur erreicht hat, vom Volumen der Speisemasse relativ zu seiner Randfläche, an der gekühlt werden kann, ab. Um die Abkühlphase beim Durchfahren des kritischen Temperaturbereichs bis zur Erreichung der Endtemperatur auch im Kern der Speisemasse auf ein tolerierbares Maß im Bereich unterhalb von 120 Minuten, insbesondere kürzer als 90 Minuten, zu halten, ist es deshalb bekannt, die Speise vorportioniert in flache Behälter abzufüllen und erst diese flachen Behälter dann einzeln herunterzukühlen. Durch das Vorportionieren in kleinere Behälter werden allerdings wiederum höhere Kosten verursacht.

Die DE 40 09 157 C2 beschreibt ein Verfahren zur Vorbehandlung von Reis, bei dem der Reis entsprechend einem bestimmten Temperaturprozess vorgekocht und anschließend getrocknet wird.

Die EP 0 338 282 B1 offenbart ein Verfahren zur sterilen Vorkochung von Nudelprodukten, die nach der Kochung verzehrfertig abgepackt werden können.

Die DE 37 27 594 A1, die DE-OS 1 926 704 und die DE 32 00 165 A1 beschreiben jeweils Rührwerke, bei denen das Rührwerk in der Art eines Wärmetauschers ausgebildet ist und von einem Kühl- bzw. Heizmedium durchströmt werden kann.

Die US-A-5 218 898 offenbart ein Verfahren gemäß dem Oberbegriff des Anspruchs 1. Aufgabe der vorliegenden Erfindung ist es ein neues Verfahren zur Kühlung einer Vielzahl von Portionen einer vorgekochten Speise gemäß Anspruch 1 vorzuschlagen, ohne diese vor dem Kühlprozess vorportionieren zu müssen.

Vorteilhafte Ausführungsformen der Erfindung sind Gegenstand der Unteransprüche.

Ein Vorteil des erfindungsgemäßen Verfahrens liegt insbesondere darin, dass die Speise während der Abkühlphase zugleich gekühlt und durch Einsatz eines Rührwerks durchmischt wird. Durch die Durchmischung der Speisemasse, die später eine Vielzahl von einzelnen Speiseportionen ergibt, kann ein rascher Temperaturausgleich zwischen den einzelnen Temperaturbereichen im Rührkessel bewirkt werden. Außerdem wird durch den Einsatz eines als Wärmetauschers ausgebildeten Rührwerks, das von einem gasförmigen oder flüssigen Kühlmittel durchströmt wird, die mit der Speise in Kontakt befindliche Kühlfläche erheblich vergrößert. Im Ergebnis kann durch diese beiden Maßnahmen die Abkühlphase zum Durchfahren des kritischen Temperaturbereiches zwischen 55°C und 8°C erheblich verkürzt werden.

Grundsätzlich ist es möglich, die Speise lediglich durch Einsatz des als Wärmetauscher ausgebildeten Rührwerks zu kühlen. Die Kühlleistung lässt sich aber noch erheblich erhöhen, wenn während der Abkühlphase auch der Rührkessel gekühlt wird. Dazu können konventionelle Rührkessel verwendet werden, die doppelwandig ausgebildet sind und von einem Kühlmittel, beispielsweise Eiswasser, Eisbrei oder einer Gykol-Wasser-Mischung, durchströmbar sind.

Zur Durchführung des erfindungsgemäßen Verfahrens ist ein neuartiges Rührwerk erforderlich, das in Zusammenwirken mit dem Rührgefäß zur Durchmischung der Speisen geeignet ist. Gattungsgemäß ist das Rührwerk in der Art eines Wärmetauschers ausgebildet und kann von einem Kühlmedium durchströmt werden, so dass im Ergebnis Wärmeenergie aus der Speisemasse abgeführt werden kann. Um einen ausreichenden Strömungsquerschnitt im Rührwerkkopf realisieren zu können, wie er insbesondere bei der Verwendung von Eisbrei als Kühlmittel notwendig ist, ist beim Rührwerk der Rührwerkkopf aus einem feststehend angeordneten Deckel und einer zusammen mit dem Rührwerk drehbaren Wanne gebildet, wobei der Deckel dichtend auf der Wanne befestigbar ist.

Wird das Rührwerk statt von einem Kühlmedium von einem Heizmedium, beispielsweise Heißwasser oder Heißdampf, durchströmt, ist es selbstverständlich auch möglich, die vom Rührwerk durchmischte Speisemasse zu erwärmen. Dadurch kann die Dauer der Aufwärmphase während der Zubereitung der Speisen erheblich verkürzt werden, da größere Wärmemengen in kürzerer Zeit in die Speisemasse einkoppelbar sind.

Durchmischbare Massen im Sinne dieser Erfindung sind alle Stoffe bzw. Stoffgemische, deren Aggregatszustand zumindest noch eine geringfügige Durchmischung erlaubt. Darunter fallen insbesondere auch hochviskose Massen, wie beispielsweise ein Kartoffelbrei, oder Gemische aus flüssigen Bestandteilen und Feststoffbestandteilen, wie beispielsweise ein Eintopf.

Beim Einsatz des Rührwerks bei der Zubereitung von Speisen richten sich dessen Abmessungen im Wesentlichen nach den Abmessungen bzw. der maximalen Füllmenge der Kessel, in denen die Speisen aufgenommen werden. Je nach erforderlicher Kühl- bzw. Heizleistung kann die vom Rührwerk dargestellte Kühl- bzw. Heizfläche in einfacher Weise dadurch angepasst werden, dass beispielsweise die Anzahl der Rührflügel erhöht wird. Die Außenabmessungen des Rührwerks können dabei unverändert bleiben.

Als Kühl- und/oder Heizmedium können alle gasförmigen oder flüssigen Medien, beispielsweise Eiswasser, eine Glykol-Wasser-Mischung, flüssiger Stickstoff, Heißwasser oder Heißdampf, zum Einsatz kommen, da das Kühl- bzw. Heizmedium lediglich die Wärmeenergie aus der zu durchmischenden Masse abführt beziehungsweise in diese einkoppelt, aber kein direkter Stoffaustausch stattfindet. Im Lebensmittelbereich sind besonders Eiswasser, Heißwasser und Heißdampf zum Einsatz im erfindungsgemäßen Rührwerk geeignet, da diese Medien in Großküchen vielfach bereits vorhanden sind und außerdem auch im Falle von Störungen, das heißt falls das Medium aus dem Rührwerk uneewünscht austritt, beispielsweise durch Leckagen, keine Gesundheitsgefährdung darstellen.

Die konstruktive Ausführung des Rührwerks ist grundsätzlich beliebig, solange an den Außenflächen des Rührwerks, die mit der zu durchmischenden Masse in Kontakt kommen, ein ausreichender Wärmeaustausch zwischen der Masse und dem das Rührwerk durchströmenden Kühl- bzw. Heizmedium ermöglicht wird. Besonders vorteilhaft ist es, wenn das Rührwerk einen Rührwerkkopf und einen beziehungsweise mehrere Rührflügel aufweist, wobei der Rührwerkkopf und die verschiedenen Rührwerksflügel durch Stege miteinander verbunden sind. Die Rührflügel und Stege sind dabei doppelwandig auszuführen und stellen dadurch einzelne Leitungsabschnitte dar. Durch entsprechend dichtende Verbindung zwischen den Rührflügeln, den Stegen und dem Rührwerkkopf, beispielsweise durch Verschweißen der einzelnen Teile, entsteht dann eine geschlossene Leitung, deren Einlauf und Rücklauf in den Rührwerkkopf mündet. An dem Rührwerkkopf seinerseits ist ein Zu- und ein Ablauf für das Kühl- bzw. Heizmedium vorgesehen. Im Ergebnis strömt also das Kühl- bzw. Heizmedium in den Rührwerkkopf ein und durchströmt von dort ausgehend die einzelnen Rührflügel und die die Rührflügel verbindenden Stege. Das aufgrund des Wärmeaustausches in den Stegen beziehungsweise Rührflügeln abgekühlte beziehungsweise erwärmte Medium strömt dann wiederum über den Rührwerkkopf aus und wird über den Ablauf abgeführt. Dabei ist es besonders vorteilhaft, wenn das Kühl- bzw. Heizmedium in einem Kühl- bzw. Heizkreislauf durch einen Kühler bzw. eine Heizeinrichtung geführt wird. Selbstverständlich ist es auch möglich, dass ausgehend vom Rührwerkkopf mehrere parallel zueinander verlaufende Leitungen durch die einzelnen Rührflügel und Stege verlaufen, so dass das Rührwerk entlang mehrerer parallel zueinander verlaufender Leitungen vom Kühl- bzw. Heizmedium durchströmbar ist.

Um die Durchmischung des Kühl- bzw. Heizmediums am Ein- bzw. Rücklauf im Rührwerkkopf zu verhindern, kann der Rührwerkkopf zwei getrennte Kammern aufweisen. Die erste Kammer bildet dabei den Einlauf der Leitung durch das Rührwerk und kann an den Zulauf für das Kühl- bzw. Heizmedium angeschlossen werden. Die zweite Kammer bildet dann den Rücklauf der Leitung durch das Rührwerk und ist an den Ablauf für das Kühl- bzw. Heizmedium anschließbar. Durch die Trennwandung zwischen den beiden Kammern wird eine Durchmischung des frischen Kühl- bzw. Heizmediums am Einlauf mit dem bereits erwärmten bzw. abgekühlten Kühl- bzw. Heizmedium am Rücklauf ausgeschlossen.

Um die Anschlüsse für den Zu- und Ablauf des Kühl- bzw. Heizmediums einfach ausbilden zu können, beispielsweise in der Art von Steckkupplungen, an denen geeignete Schläuche anschließbar sind, ist es vorteilhaft, wenn der Rührwerkkopf einen feststehenden und einen zusammen mit den Rührflügeln drehbaren Teil aufweist. In den feststehenden Teil werden dann die Anschlüsse für den Zu- bzw. Ablauf des Kühl- bzw. Heizmediums angeordnet, wohingegen der drehbar gelagerte Teil des Rührwerkkopfs den Ein- bzw. Auslauf in die Leitung durch das Rührwerk darstellt.

Um den Rührflügel in unterschiedlichen Rührkesseln einsetzen zu können, ist es vorteilhaft, wenn am Rührwerkkopf wahlweise unterschiedliche Adapterelemente befestigt werden können, die jeweils mit verschiedenen Antriebswellen in Eingriff bringbar sind. Im Ergebnis kann dadurch erreicht werden, dass das Rührwerk mit dem Rührwerkkopf, den Rührflügeln und Stegen in einheitlichen Baureihen hergestellt werden kann und eine Anpassung an unterschiedliche Antriebswellen durch Anbringung verschiedener Adapterelemente ermöglicht wird.

Alternativ zum Antrieb des Rührwerks mittels eines Antriebsmotors und eine die Drehbewegung übertragenden Antriebswelle kann auch die Strömungsenergie des am Einlauf einströmenden Kühl- bzw. Heizmediums zum Antrieb des Rührwerks ausgenutzt werden. Beispielsweise können dazu bekannte Strömungslamellen im Rührwerkkopf angeordnet werden, die die Strömungsenergie des einströmenden Mediums in eine Drehbewegung umwandeln.

Bevorzugte Ausführungsformen sind in den Zeichnungen beispielhaft dargestellt und werden nachfolgend näher erläutert.

Es zeigen:
- **Fig.1**: ein Rührwerk in seitlicher Ansicht;
- **Fig.2**: das Rührwerk gemäß **Fig. 1** in einer ersten perspektivischen Ansicht;
- **Fig.3**: das Rührwerk gemäß **Fig. 1** in einer zweiten perspektivischen Ansicht;
- **Fig.4**: das Gitternetzmodell eines Rührwerkkopfes;

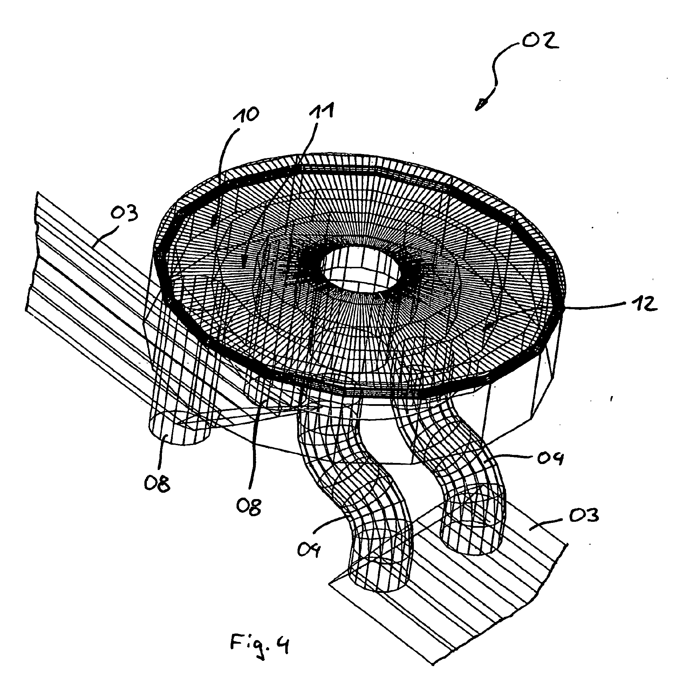

- **Fig.4**: einen Rührwerkkopf in einem schematisch dargestellten Querschnitt;

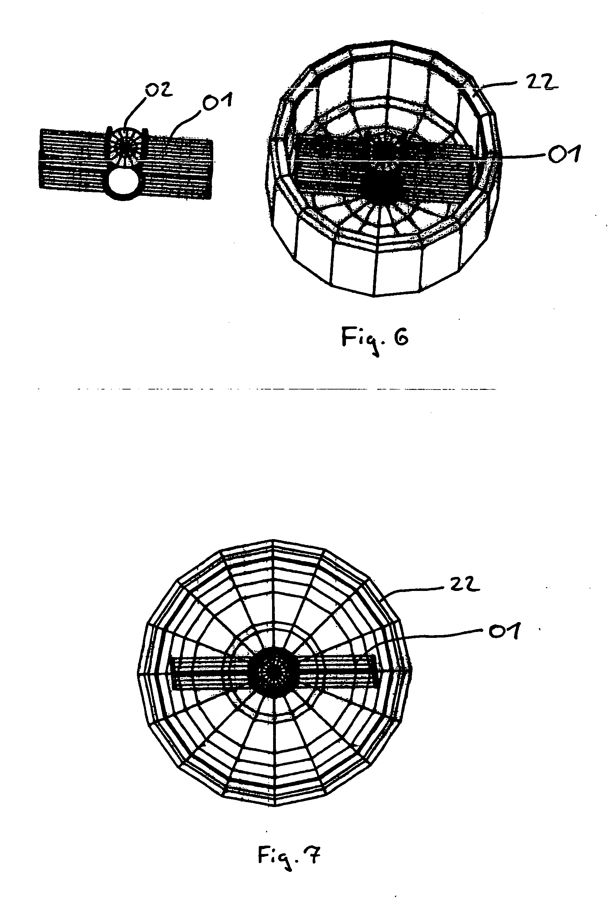

- **Fig.6**: ein Rührgefäß mit Rührwerk in perspektivischer Ansicht;
- **Fig.7**: das Rührgefäß mit Rührwerk gemäß **Fig. 6** in Ansicht von oben;

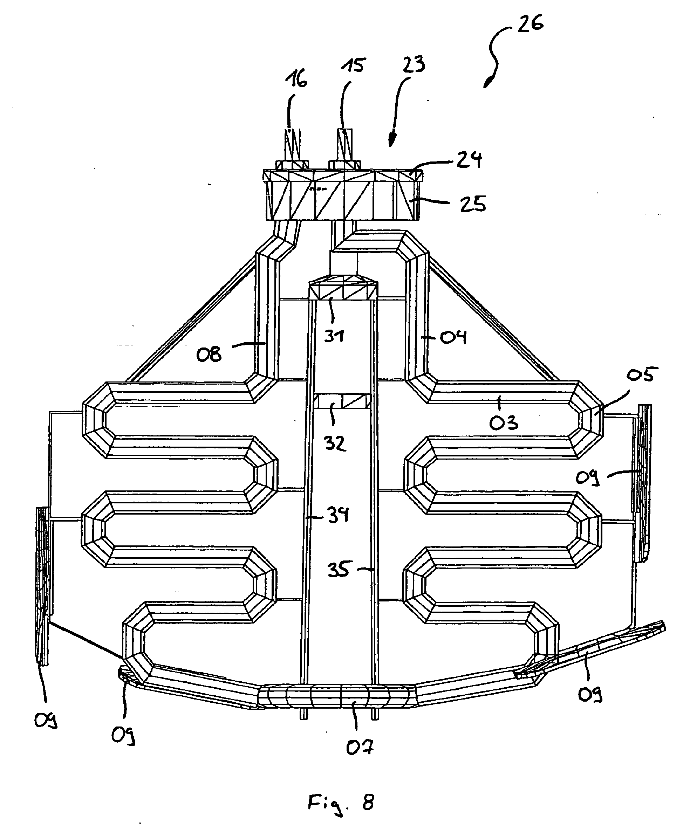

- **Fig.8**: eine zweite Ausführungsform eines Rührwerks in seitlicher Ansicht;

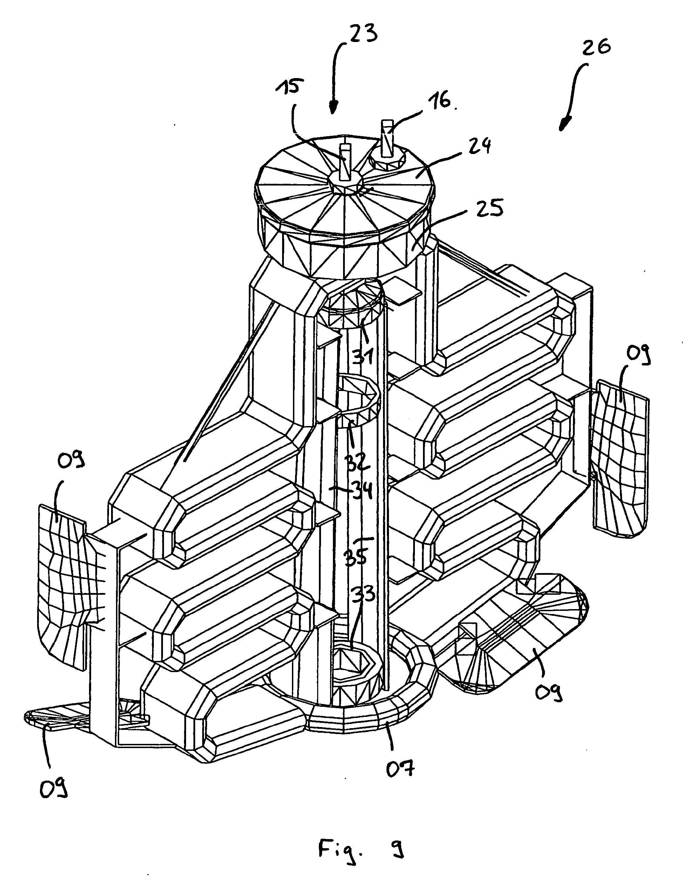

- **Fig.9**: das Rührwerk gemäß **Fig. 8** in einer ersten perspektivischen Ansicht;

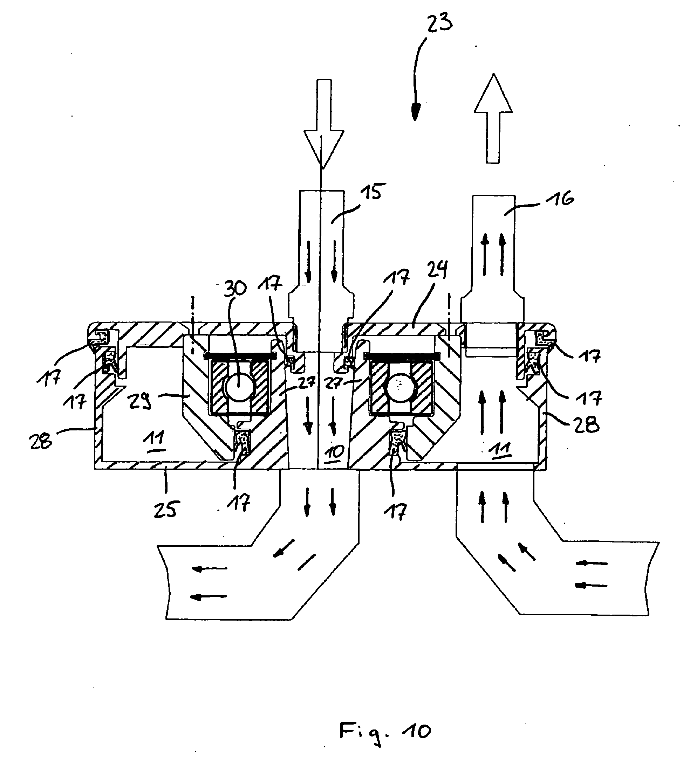

- **Fig. 10**: den Rührwerkkopf des Rührwerks gemäß **Fig. 8** im Querschnitt;

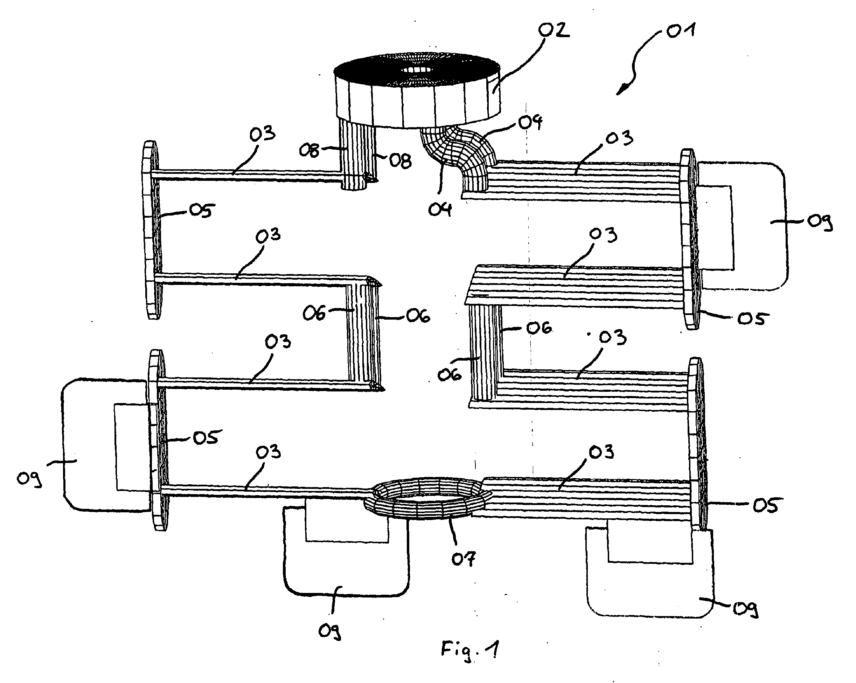

**Fig.1** zeigt ein Rührwerk 01, das in einem Kessel zur Zubereitung von Speisen Verwendung finden kann und der Durchmischung und Aufheizung bzw. Kühlung der Speisen dient.

Das Rührwerk 01 ist als Schweißteil hergestellt und im Wesentlichen aus einem Rührwerkkopf 02, acht Rührflügeln 03 und die Rührflügel 03 beziehungsweise den Rührwerkkopf 02 verbindenden Stegen 04, 05, 06, 07 und 08 aufgebaut. Die Rührflügel 03 und die Stege 04 bis 08 sind doppelwandig ausgebildet und zu einer geschlossenen Leitung verbunden, so dass ein am Rührwerkkopf 02 einströmendes Kühl- bzw. Heizmedium das Rührwerk 01 entlang dieser Leitung durchströmen und dabei Wärmeenergie abführen bzw. Wärmeenergie einkoppeln kann.

Die Rührflügel 03 sind gegenüber ihrer horizontal verlaufenden Bewegungsebene mit einem Winkel von circa 20° geneigt, so dass beim rotatorischen Antrieb des Rührwerks 01 um seine Mittelachse die an den Rührflügeln 03 vorbeiströmende Masse nach oben beziehungsweise unten abgelenkt wird, so dass die Masse permanent durchmischt wird und sich keine stehenden Zonen bilden.

Zum Antrieb des Rührwerks 01 dient eine nicht dargestellte, im Rührgefäß vorgesehene Antriebswelle, die sich vom Boden des Rührgefäßes nach oben erstreckt und in einer Aufnahme am Rührwerkkopf 02 in Eingriff gebracht werden kann. Damit die Antriebswelle nicht mit dem Rührwerk 01 kollidiert, ist der Steg 07 in der Art einer Ringleitung ausgebildet, so dass die Antriebswelle das Rührwerk 01 im Bereich des Stegs 07 durchgreifen kann.

An zwei der Stege 05 und an den beiden unteren Rührflügeln 03 sind jeweils Abstreifelemente 09 befestigt, die bei der rotatorischen Antriebsbewegung des Rührwerks 01 entlang der Bauteilwandung des Rührgefäßes geführt werden, so dass sich im Grenzbereich zwischen Masse und Bauteilwandung keine stehenden Zonen bilden, sondern auch in diesem Bereich eine optimale Durchmischung erreicht wird. Um das Rührwerk in Rührgefäßen unterschiedlicher Abmessungen einsetzen zu können, können die Abstreifelemente 09 verstellbar am Rührwerk 01 befestigt sein, so dass ein Größenausgleich ermöglicht wird.

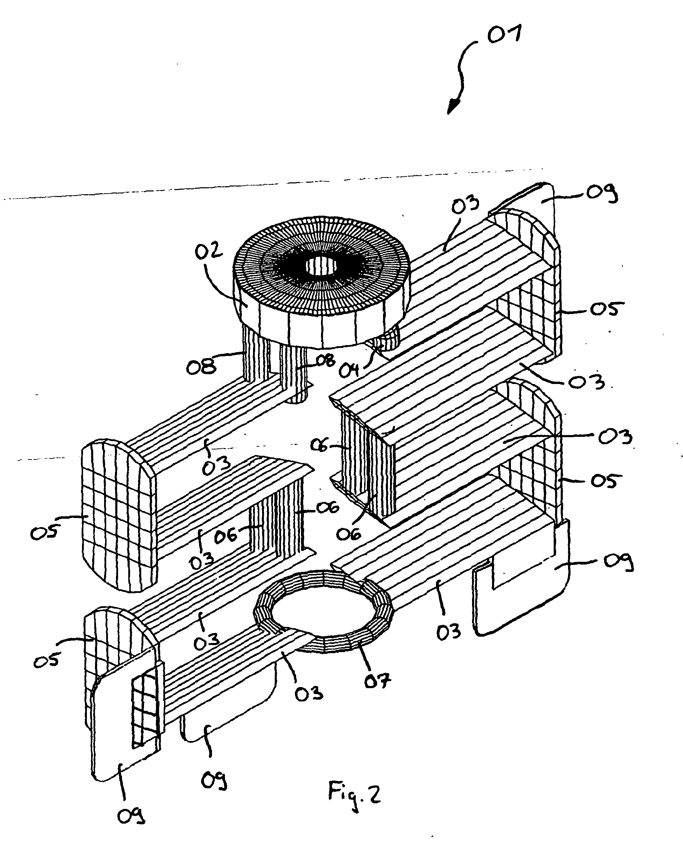

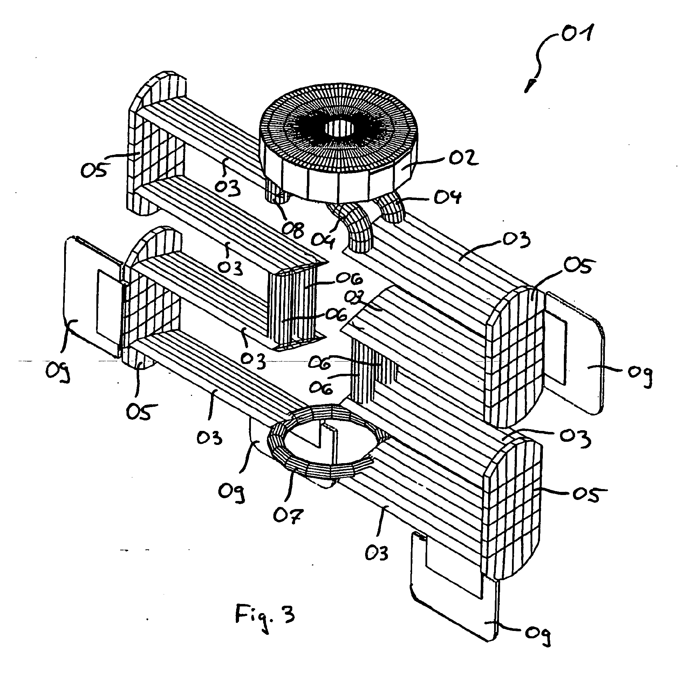

**Die** **Fig. 2** und **3** zeigen das Rührwerk 01 in zwei unterschiedlichen perspektivischen Ansichten.

**In** **Fig. 4** ist der Rührwerkkopf 02 als Gitternetzmodell vergrößert dargestellt. Der Deckel des Rührwerkkopfs 02 mit den Anschlüssen für Zu- und Ablauf des Kühl- bzw. Heizmediums ist in diesem Gitternetzmodell nicht dargestellt. Der Rührwerkkopf weist zwei konzentrisch angeordnete Kammern 10 und 11 auf, die durch eine Trennwandung 12 voneinander getrennt sind. Die Stege 04 münden beide in die innere Kammer 11, wohingegen die Stege 08 in die äußere Kammer 10 münden. Dadurch wird erreicht, dass das frische Kühl- bzw. Heizmedium über die äußere Kammer 10 und die Stege 08 in das Rührwerk 01 einströmen kann und durch die Trennwandung 12 von dem bereits erwärmten beziehungsweise abgekühlten Kühl- bzw. Heizmedium, das über die Stege 04 zurück in die Kammer 11 des Rührwerkkopfs 02 zurückströmt, getrennt ist.

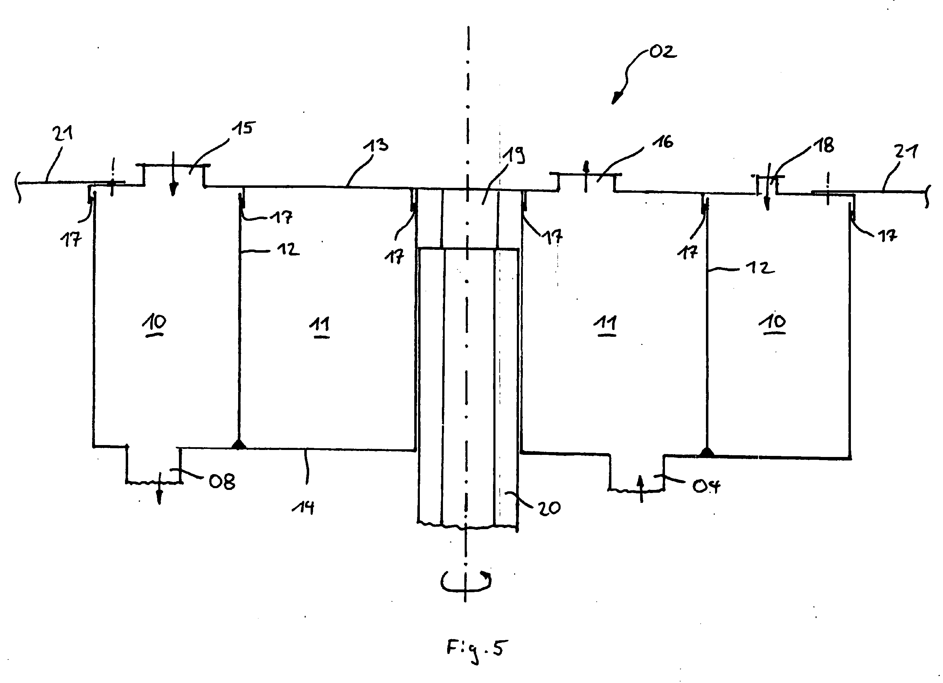

Der schematische Aufbau und die Funktion des Rührwerkkopfes 02 sind anhand des in **Fig. 5** dargestellten schematischen Querschnitts erkennbar. Die beiden Kammern 10 und 11 werden von der Trennwandung 12 voneinander getrennt. Beide Kammern 10 und 11 werden von einem feststehend angeordneten Deckel 13 und einer zusammen mit dem Rührwerk drehbar gelagerten Wanne 14 nach außen hin begrenzt. Die Trennwandung 12 ist flüssigkeitsdicht am Boden der Wanne 14 festgeschweißt.

Über den Zulauf 15 strömt das Kühl- bzw. Heizmedium in die Kammer 10 ein und gelangt von dort in die Stege 08, die den Einlauf in die Leitung durch das Rührwerk 01 bilden. Hat das Kühl- bzw. Heizmedium alle Stege 04 bis 08 und die Rührflügel 03 durchflossen, strömt es über die den Rücklauf bildenden Stege 04 in die Kammer 11 des Rührwerkkopfes 02 zurück, von wo es über den Ablauf 16 abgeführt werden kann. Zur Abdichtung der Kammern 10 und 11 sind in den Dichtspalten zwischen dem feststehenden Deckel 13 und der sich zusammen mit den Rührflügeln drehenden Wanne 14 bzw. der Trennwandung 12 Wellendichtringe 17 angeordnet.

Neben dem Zulauf 15 und dem Ablauf 16 ist in dem Deckel 13 außerdem noch ein Druckluftanschluss 18 vorgesehen, an dem eine Druckluftleitung anschließbar ist. Über dem Druckluftanschluss 18 kann Druckluft in die Kammer 10 eingepresst werden, so dass das im Rührwerk 01 befindliche Kühl- bzw. Heizmedium über die Kammer 11 und den Ablauf 16 nach außen verdrängt werden kann.

Die Mitte der Wanne 14 ist als Vielkantverzahnung 19 ausgebildet, in der das formkomplementär ausgebildete Ende einer Antriebswelle 20 in Eingriff bringbar ist, so dass ein Drehmoment von der Antriebswelle 20 auf die Wanne 14 übertragen werden kann. Am Deckel 13 ist ein gebrochen dargestelltes Eingreifschutzelement 21 befestigt, um ein Eingreifen von außen in das angetriebene Rührwerk 01 zu verhindern.

**Fig. 6** zeigt das Rührwerk 01, wie es in einem als Kochkessel ausgebildeten Rührgefäß 22 angeordnet werden kann.

**Fig. 7** stellt das Rührwerk 01 und das Rührgefäß 22 in Ansicht von oben dar. Das Rührgefäß 22 seinerseits ist ebenfalls doppelwandig ausgebildet. und kann vom gleichen Kühl- bzw. Heizmedium durchströmt werden wie das Rührwerk 01, so dass die im Rührgefäß 22 angeordneten Speisen in kürzerer Zeit aufgeheizt beziehungsweise abgekühlt werden können.

**Fig. 8** stellt eine zweite Ausführungsform eines erfindungsgemäßen Rührwerks in seitlicher Ansicht dar. Wie beim Rührwerk 01 sind die doppelwandig ausgebildeten Stege 03, 04, 05, 06, 07 und 08 vorgesehen, die von einem geeigneten Kühlmittel, beispielsweise Eisbrei, durchströmt werden können. Die Enden der Stege 04 und 08 münden jeweils in den Rührwerkkopf 23, der aus einem Deckel 24 und einer Wanne 25 gebildet ist.

Um die Antriebsleistung des Antriebsmotors auf das Rührwerk 26 übertragen zu können, ist eine Aufnahme vorgesehen, die aus zwei Vertikalstegen 34 und 35 und drei daran befestigten Innenvielkantelementen 31, 32 und 33 (siehe **Fig. 9**) gebildet ist. Die in **Fig. 8** nicht dargestellte, sich im Rührgefäß vertikal nach oben erstreckende Antriebswelle kommt in den Innenvielkantelementen 31 bis 33 formschlüssig zum Eingriff, um das Antriebsmoment auf das Rührwerk 26 zu übertragen. Einen besonderen Vorteil stellt es dabei dar, dass das Rührwerk 26 in einfacher Weise von oben auf die Antriebswelle aufgesteckt werden kann, ohne dass insbesondere eine Demontage des Rührwerkkopfes 23 notwendig ist.

In **Fig. 9** ist das Rührwerk 26 in perspektivischer Ansicht dargestellt, wobei insbesondere die Rührflügel 09 erkennbar sind.

**Fig. 10** stellt den Aufbau des Rührwerkkopfes 23 im Querschnitt dar. Der Rührwerkkopf 23 wird im Wesentlichen aus einer kreisringförmigen Wanne 25 und einem daran drehbar gelagerten Deckel 24 gebildet. Zur Realisierung der drehbaren Lagerung des Deckels 24 an der Wanne 25 sind ein Befestigungsring 29 und ein in der Art eines Wälzlagers ausgebildetes Lagerelement 30 vorgesehen. Der Befestigungsring 29 ist am Innenring 27 der Wanne 25 mittels des Lagerelements 30 drehbar gelagert. Zur Befestigung des Deckels 24 an der Wanne 25 werden Befestigungsschrauben durch entsprechende Ausnehmungen im Deckel 24 durchgesteckt und von oben in den Befestigungsring 29 eingeschraubt, was in **Fig. 10** durch strichpunktierte Linien angedeutet ist. Im Ergebnis ist dadurch der Deckel 24 drehbar an der Wanne 25 gelagert, so dass zur Montage bzw. Demontage des Rührwerks 23 in einem Rührgefäß nur die Befestigung des Zulaufs 15 und des Ablaufs 16 notwendig ist.

Durch die kreisringförmige Ausbildung der Wanne 25 wird im Zentrum der Wanne 25 die Einlaufkammer 10 gebildet, die seitlich vom Innenring 27 begrenzt wird. Die Auslaufkammer 11 wird von der Bauteilwandung der Wanne 25 und dem Befestigungsring 29 begrenzt. Durch die verschiedenen Dichtringe 17 werden die beiden Kammern 10 und 11 flüssigkeitsdicht abgedichtet, so dass im Betrieb des Rührwerks 26 das Kühlmittel nicht aus den Kammern 10 und 11 durch die Dichtspalte hindurch austreten kann. Durch die Anordnung der Kammer 10 im Zentrum der Wanne 25 kann ein sehr kompakter Rührwerkkopf gestaltet werden, wodurch erreicht wird, dass die auf die verschiedenen Bauteile des Rührwerkkopfes 23 wirkenden Druckkräfte auch bei hohen Innendrücken, wie sie insbesondere bei der Verwendung von Eisbrei als Kühlmittel auftreten, ein tolerierbares Maß nicht überschreiten.

## Patentansprüche

1. Verfahren zur Herstellung einer Vielzahl von Portionen einer vorgekochten Speise,
- bei dem die Speise zunächst bei Temperaturen von über 55°C gekocht und verzehrfertig zubereitet wird,
- anschließend die Speise in einer Abkühlphase von der Zubereitungstemperatur auf eine Endtemperatur abgekühlt wird, wobei die Speise während der Abkühlphase von einem als Wärmetauscher ausgebildeten Rührwerk (01) gleichzeitig durchmischt und abgekühlt wird,
**dadurch gekennzeichnet,**
**dass** die Speise in der Abkühlphase im gleichen, auch zur Erhitzung der Speisen geeigneten Rührkessel (22) verbleibt, und zumindest so schnell abgekühlt wird, dass der Temperaturbereich von 55°C bis 8°C innerhalb einer Zeit von maximal 120 min durchfahren wird,
- die Speise bei einer Endtemperatur im Bereich von 8°C bis 0°C für einige Tage gelagert wird,
- anschließend die Speise auf eine zum Verzehr geeignete Temperatur aufgewärmt wird.

2. Verfahren nach Anspruch 1,
**dadurch gekennzeichnet,**
**dass** die Abkühlphase maximal ca. 90 min dauert.

3. Verfahren nach Anspruch 1 oder 2,
**dadurch gekennzeichnet,**
**dass** die Endtemperatur ca. 3°C beträgt.

4. Verfahren nach einem der Ansprüche 1 bis 3,
**dadurch gekennzeichnet,**
**dass** auch der Rührkessel (22) in der Abkühlphase gekühlt wird.

## Claims

1. A method for producing a plurality of portions of a pre-cooked food,
- wherein the food is initially cooked at temperatures above 55°C and prepared ready for consumption,
- the food is then cooled in a cooling phase from the preparation temperature to a final temperature, with the food being mixed thoroughly and at the same time being cooled during the cooling phase by an agitator (01) constructed as a heat exchanger,
**characterized in that**
during the cooling phase the food remains in the same agitator vessel (22) which is also suitable for heating the food, and is cooled at least so fast that the temperature passes through a range of 55°C to 8°C within a maximum time of 120 min,
- the food is stored for a few days at a final temperature in the range of 8°C to 0°C,
- the food is then heated to a temperature suitable for consumption.

2. The method according to Claim 1,
**characterized in that**
the cooling phase lasts a maximum of approximately 90 min.

3. The method according to Claim 1 or 2,
**characterized in that**
the final temperature is approximately 3°C.

4. The method according to any of Claims 1 to 3,
**characterized in that**
the agitator vessel (22) is also cooled during the cooling phase.

## Revendications

1. Procédé pour la fabrication d'un grand nombre de portions d'un plat cuisiné,
- où le plat est cuisiné et préparé prêt à consommer tout d'abord à des températures de plus de 55°C,
- ensuite le plat est refroidi de la température de préparation à une température finale dans une phase de refroidissement, le plat étant refroidi et mélangé en même temps pendant la phase de refroidissement par un agitateur (01) réalisé comme un échangeur thermique,
**caractérisé en ce que**
le plat reste pendant la phase de refroidissement dans la même cuve de mélange (22) également appropriée pour le chauffage des plats et est refroidi au moins aussi rapidement de sorte que la plage de température est passée de 55°C à 8°C pendant 120 minutes maximum,
- **en ce que** le plat est stocké à une température finale comprise entre 8°C et 0°C pendant quelques jours,
- **en ce qu'** ensuite le plat est réchauffé à une température appropriée à la consommation.

2. Procédé selon la revendication 1,
**caractérisé en ce que**
la phase de refroidissement dure maximum 90 minutes.

3. Procédé selon la revendication 1 ou 2,
**caractérisé en ce que**
la température finale est d'environ 3°C.

4. Procédé selon l'une des revendications 1 à 3,
**caractérisé en ce que**
la cuve d'agitation (22) est également refroidie pendant la phase de refroidissement.
